# EUROPEAN PATENT SPECIFICATION

(11) **EP 2 058 199 B1**
(45) Date of publication and mention of the grant of the patent: **10.11.2010**
(21) Application number: 08704220.6
(22) Date of filing: 24.01.2008
(51) Int. Cl.: B60W 10/06, B01D 53/86, B01D 53/94, B60K 6/24, B60K 6/46, B60W 10/08, B60W 20/00, F01N 3/20, F01N 3/28, F02D 29/02

(54) **Vehicle comprising an exhaust purification device for a compression ignition type internal combustion engine**
Fahrzeug umfassend einer Abgasreinigungsvorrichtung für einen kompressionszündungs-verbrennungsmotors
Véhicule comprenant un épurateur d'échappement pour un moteur à combustion interne à allumage par compression

(30) Priority: 26.01.2007 JP 2007016432
(43) Date of publication of application: 13.05.2009
(73) Proprietor: Toyota Jidosha Kabushiki Kaisha, Toyota-shi Aichi 471-8571 (JP)
(72) Inventor: YOSHIDA, Kohei, Toyota-shi Aichi 471-8571 (JP); NISHIOKA, Hiromasa, Toyota-shi Aichi 471-8571 (JP); HAYASHI, Kotaro, Toyota-shi Aichi 471-8571 (JP); ASANUMA, Takamitsu, Toyota-shi Aichi 471-8571 (JP); HIROTA, Shinya, Toyota-shi Aichi 471-8571 (JP); OTSUKI, Hiroshi, Toyota-shi Aichi 471-8571 (JP)
(74) Representative: Kuhnen & Wacker
(86) International application number: PCT/JP2008/051467
(87) International publication number: WO 2008/091020

(56) References cited:
- EP-A- 1 195 510
- WO-A1-99/47801
- JP-A- 09 072 229
- JP-A- 2005 133 610

## Description

### TECHNICAL FIELD

The present invention relates to vehicle having a compression ignition type internal combustion engine including an exhaust purification device.

### BACKGROUND ART

Known in the art is an internal combustion engine arranging in an engine exhaust passage an NOₓ storage catalyst storing NOₓ contained in exhaust gas when the air-fuel ratio of the inflowing exhaust gas is lean and releasing the stored NOₓ when the air-fuel ratio of the inflowing exhaust gas becomes a stoichiometric air-fuel ratio or rich. In this internal combustion engine, NOₓ formed when burning fuel under a lean air-fuel ratio is stored in the NOₓ storage catalyst. On the other hand, as the NOₓ storage catalyst approaches saturation of the NOₓ storage ability, the air-fuel ratio of the exhaust gas is temporarily made rich, whereby NOₓ is released from the NOₓ storage catalyst and reduced. However, fuel and lubrication oil contain sulfur. Therefore, the exhaust gas also contains SOₓ. This SOₓ is stored together with the NOₓ in the NOₓ storage catalyst. This SOₓ is not released from the NOₓ storage catalyst by just making the exhaust gas a rich air-fuel ratio. Therefore, the amount of SOₓ stored in the NOₓ storage catalyst gradually increases. As a result, the storable NOₓ amount ends up gradually decreasing.

However, in this case, if raising the temperature of the NOₓ storage catalyst and making the air-fuel ratio of the exhaust gas flowing into the NOₓ storage catalyst rich, the SOₓ stored in the NOₓ storage catalyst is gradually released from the NOₓ storage catalyst. Therefore, there is known a hybrid internal combustion engine provided with an electric motor, in which when SOₓ should be released from the NOₓ storage catalyst, the air-fuel ratio of the exhaust gas is made rich and a speed of rotation of a crankshaft is made faster by the electric motor at the time of the expansion stroke to make an after-burn period longer and thereby make the exhaust gas temperature higher (for example, see Japanese Patent Publication (A) No. 2005-61234).

On the other hand, there is known an internal combustion engine in which an SOₓ trap catalyst able to trap the SOₓ in the exhaust gas is arranged in the engine exhaust passage upstream of the NOₓ storage catalyst (see Japanese Patent Publication (A) No. 2005-133610). In this internal combustion engine, by trapping the SOₓ contained in the exhaust gas by the SOₓ trap catalyst, the inflow of SOₓ into the NOₓ storage catalyst is prevented.

However, even when using such an SOₓ trap catalyst, when the SOₓ trap rate of the SOₓ trap catalyst falls, it is necessary to regenerate the SOₓ trap catalyst. In this case, the SOₓ trap catalyst can be regenerated by raising the temperature of the SOₓ trap catalyst. However, the amount of SOₓ trapped by this SOₓ trap catalyst is much greater than the amount of SOₓ stored in the NOₓ storage catalyst, and thus, if the SOₓ trap catalyst is excessively raised in temperature even a little, the trapped SOₓ is released all at once. As a result, the SOₓ concentration in the exhaust gas flowing out from the SOₓ trap catalyst ends up becoming extremely high.

SOₓ is itself harmful, and if the temperature becomes higher, SOₓ sometimes changes to harmful hydrogen sulfide H₂S. Therefore, it is necessary to avoid the concentration of SOₓ in the exhaust gas, which is exhausted into the outside air, from becoming high. That is, when using an SOₓ trap catalyst, it is necessary to hold the concentration of SOₓ in the exhaust gas flowing out from the SOₓ trap catalyst within a constant limit.

Document EP 1 195 510 finally discloses a compression ignition type engine selectively switching between a first combustion where an amount of recirculated exhaust gas supplied in a combustion chamber is greater than an amount of recirculated exhaust gas where the amount of production of soot peaks and a second combustion where the amount of recirculated exhaust gas supplied in the combustion chamber is smaller than the amount of recirculated exhaust gas where the amount of production of soot peaks. A particulate filter carrying a NOx absorbent is arranged in the engine exhaust passage. When SOx should be released from the NOx absorbent and there is leeway in the electrical energy stored in the battery, the first combustion is performed even when the second combustion should be performed and the drop in output power of the energy is made up by the output torque of an electric motor.

### DISCLOSURE OF THE INVENTION

An object of the present invention is to provide a vehicle, comprising a compression ignition type internal combustion engine able to hold the SOₓ concentration in the exhaust gas flowing out from the SOₓ trap catalyst at a certain limit or lower.

According to the present invention, there is provided a vehicle, comprising a compression ignition type internal combustion engine, an electric power device and an exhaust purification device for said internal combustion engine, said exhaust purification device arranging, in an engine exhaust passage, an SOₓ trap catalyst able to trap SOₓ contained in exhaust gas and, in the exhaust passage downstream of the SOₓ trap catalyst, an NOₓ storage catalyst storing NOₓ contained in the exhaust gas when the air-fuel ratio of an inflowing exhaust gas is lean and releasing stored NOₓ when the air-fuel ratio of the inflowing exhaust gas becomes a stoichiometric air-fuel ratio or rich, the electric power device being able to generate vehicle drive power separate from the vehicle drive power from the engine and able to generate electric power from the engine, wherein the SOₓ trap catalyst should be regenerated, the vehicle drive power from the engine and the vehicle drive power from the electric power device are adjusted so that an SOₓ concentration in the exhaust gas flowing out from the SOₓ trap catalyst becomes less than a predetermined SOₓ concentration during a regeneration period.

### BRIEF DESCRIPTION OF THE DRAWINGS

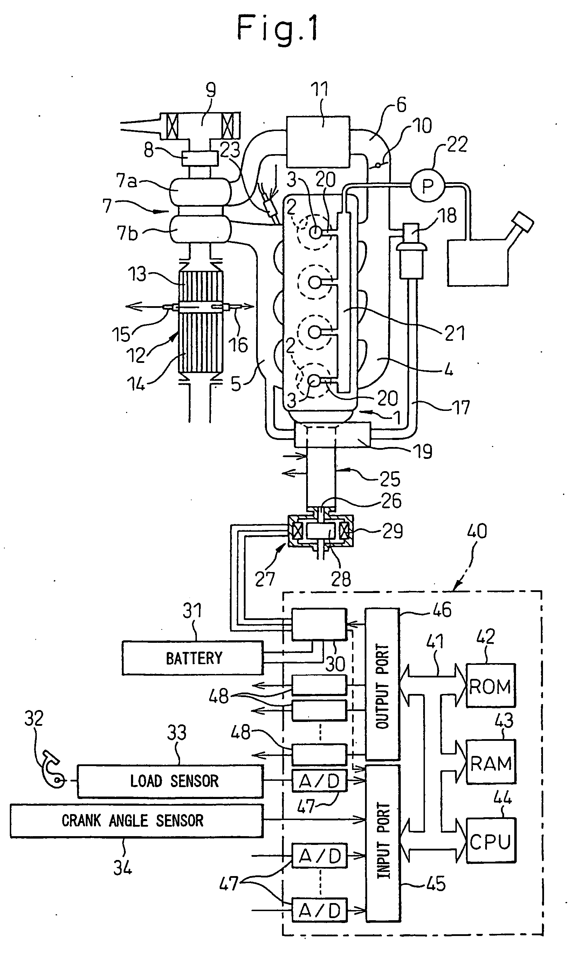

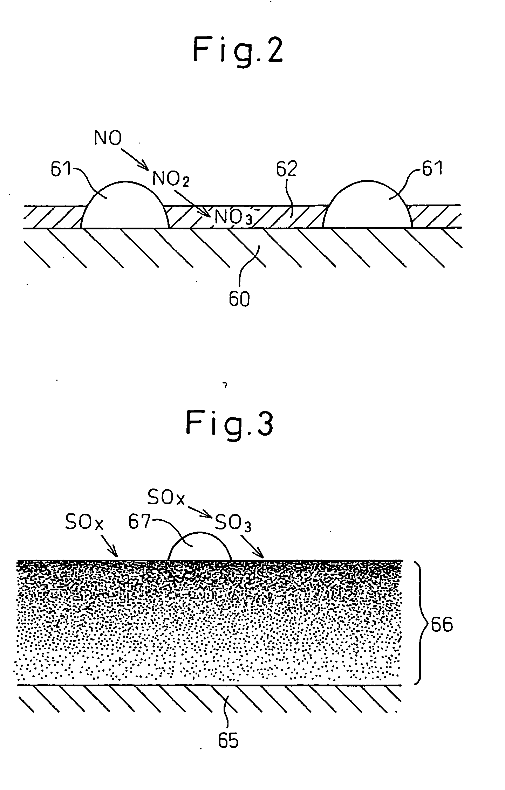

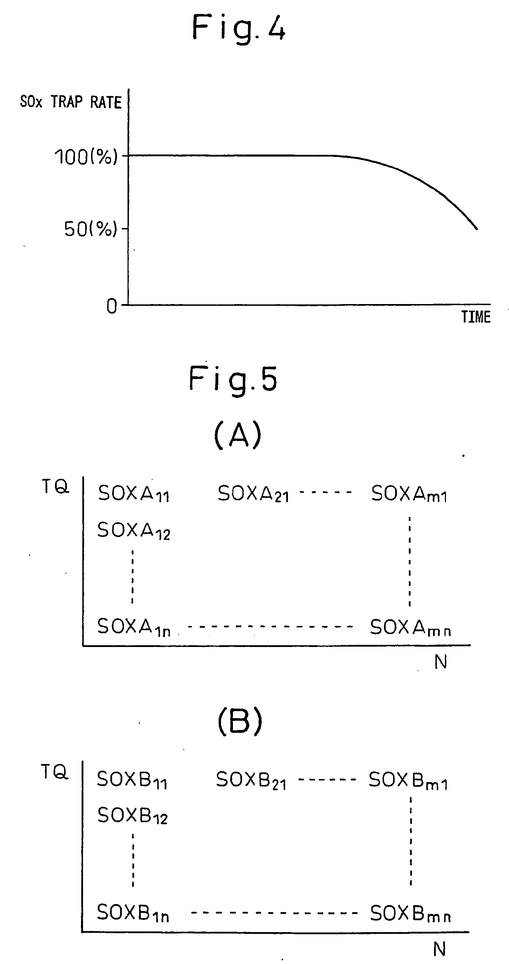

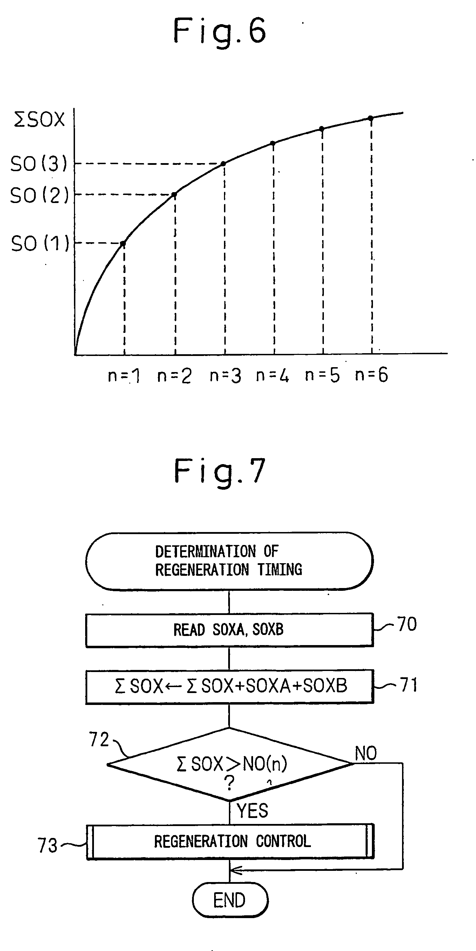

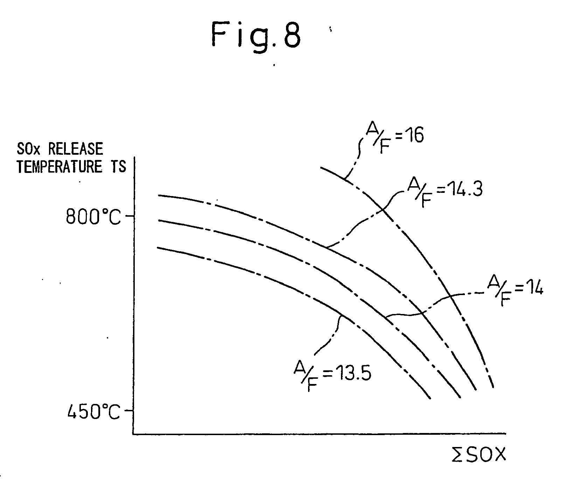

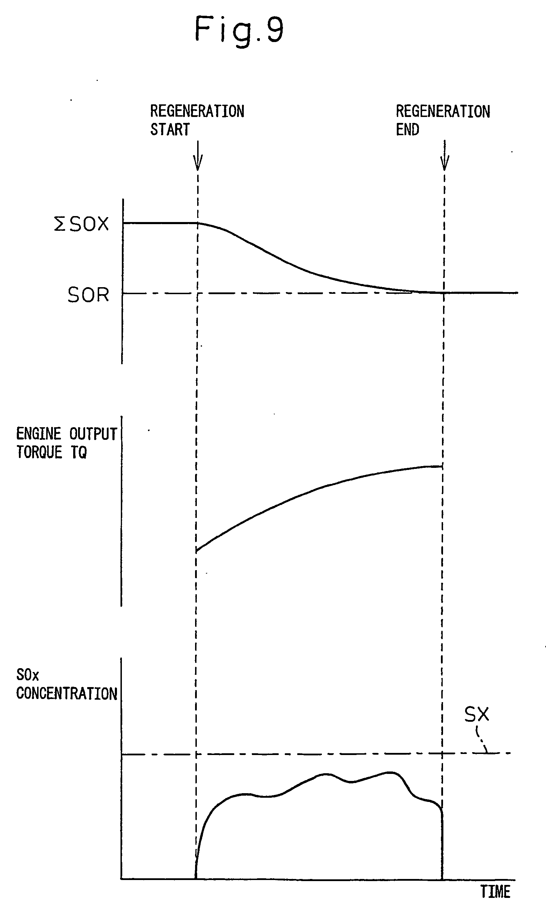

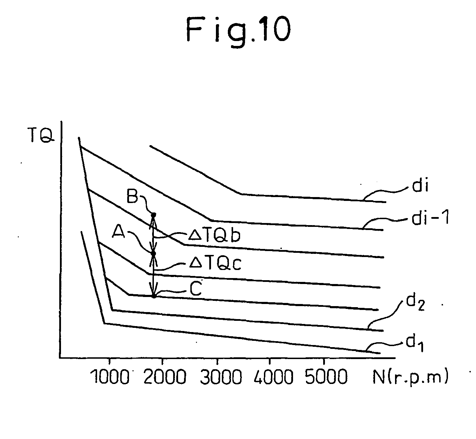

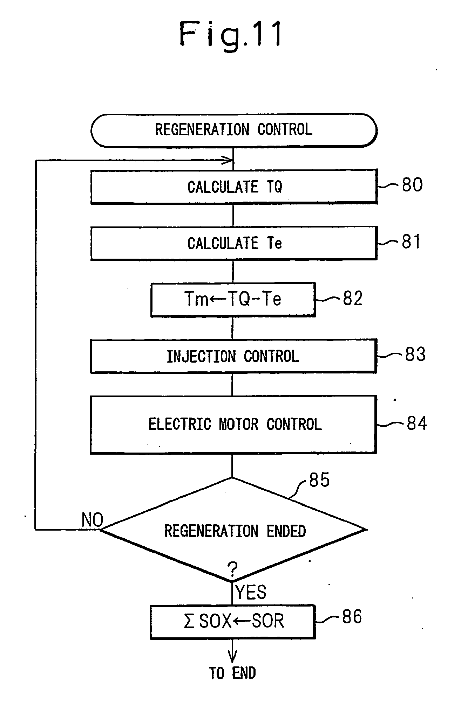

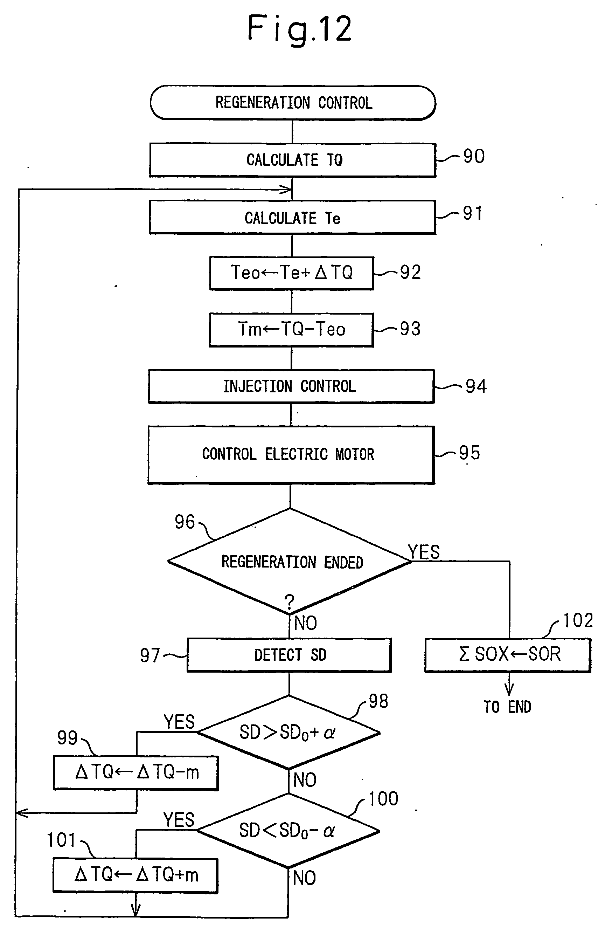

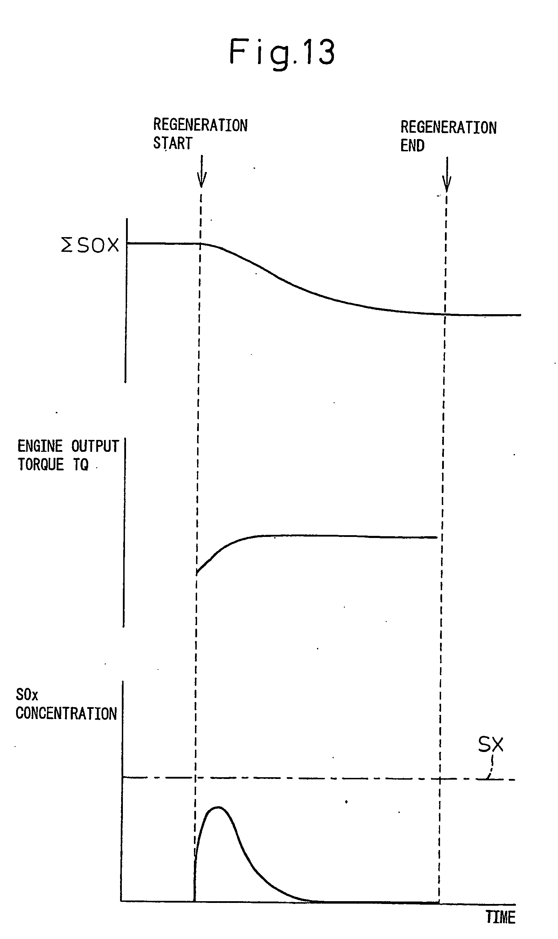

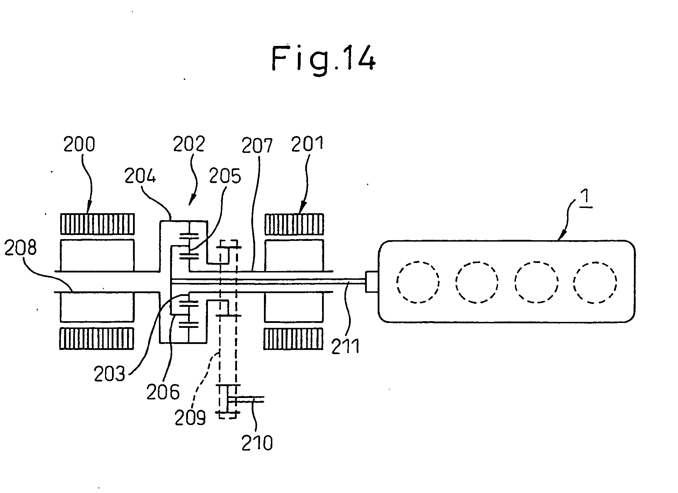

FIG. 1 is an overview of a compression ignition type internal combustion engine, FIG. 2 is a cross-sectional view of the surface part of a catalyst carrier of an NOₓ storage catalyst, FIG. 3 is a cross-sectional view of the surface part of a substrate of an SOₓ trap catalyst, FIG. 4 is a view showing the SOₓ trap rate, FIG. 5 is a view showing a map of stored SOₓ amounts SOXA, SOXB, FIG. 6 is a view showing the relationship of the stored SOₓ amount ΣSOX and the stored SOₓ amount SO(n) for regeneration control, FIG. 7 is a flow chart for determining the timing of regeneration, FIG. 8 is a view showing the SOₓ release temperature, FIG. 9 is a time chart showing regeneration control, FIG. 10 is a view showing the output torque of the engine, FIG. 11 is a flow chart for regeneration control, FIG. 12 is a flow chart showing another embodiment for regeneration control, FIG. 13 is a time chart showing regeneration control, and FIG. 14 is a view showing another embodiment of an electric power device.

### BEST MODE FOR CARRYING OUT THE INVENTION

FIG. 1 is an overview of a compression ignition type internal combustion engine.

Referring to FIG. 1, 1 indicates an engine body, 2 a combustion chamber of each cylinder, 3 an electronically controlled fuel injector injecting fuel into each combustion chamber 2, 4 an intake manifold, and 5 an exhaust manifold. The intake manifold 4 is connected through an intake duct 6 to the outlet of a compressor 7a of an exhaust turbocharger 7, while the inlet of the compressor 7a is connected through an intake air detector 8 to an air cleaner 9. Inside the intake duct 6, a throttle valve 10 driven by the step motor is arranged. Further, around the intake duct 6, a cooling device 11 for cooling the intake air flowing through the intake duct 6 is arranged. In the embodiment shown in FIG. 1, the engine cooling water is led into the cooling device 11 where the engine cooling water is used to cool the intake air.

On the other hand, the exhaust manifold 5 is connected to the inlet of an exhaust turbine 7b of the exhaust turbocharger 7. The outlet of the exhaust turbine 7b is connected to the inlet of a catalyst converter 12. Inside the catalyst converter 12, an SOₓ trap catalyst 13 and NOₓ storage catalyst 14 are arranged in this order from the upstream side. Inside the catalyst converter 12 between the SOₓ trap catalyst 13 and the NOₓ storage catalyst 14, a temperature sensor 15 for detecting the temperature of the exhaust gas flowing out from the SOₓ trap catalyst 13 and an SOₓ sensor 16 for detecting the SOₓ concentration in the exhaust gas flowing out from the SOₓ trap catalyst 13 are provided. In the embodiment according to the present invention, the temperature of the SOₓ trap catalyst 13 is estimated from the detection value of this temperature sensor 15.

The exhaust manifold 5 and intake manifold 4 are connected to each other through an exhaust gas recirculation (hereinafter referred to as "EGR") passage 17. Inside the EGR passage 17, an electronic control type EGR control valve 18 is arranged. Further, around the EGR passage 17, a cooling device 19 for cooling the EGR gas flowing through the EGR passage 17 is arranged. In the embodiment shown in FIG. 1, engine cooling water is led to the cooling device 19 where the engine cooling water cools the EGR gas. On the other hand, each fuel injector 3 is connected through a fuel tube 20 to a common rail 21. This common rail 21 is fed with fuel from an electronically controlled variable discharge fuel pump 22. The fuel fed into the common rail 21 is fed through each fuel tube 20 into the fuel injectors 3. Further, inside the exhaust manifold 5, a reducing agent feed valve 23 for feeding a reducing agent comprised of for example a hydrocarbon into the exhaust manifold 5 is attached.

On the other hand, in the embodiment shown in FIG. 1, a transmission 25 is coupled with the output shaft of the engine, while an electric motor 27 is coupled with the output shaft 26 of the transmission 25. In this case, as the transmission 25, it is possible to use an ordinary gear-type automatic transmission provided with a torque converter, a manual transmission, a gear-type automatic transmission of a type designed to automatically perform the clutch operation and gear shift operation in a manual transmission provided with a clutch, etc.

Further, the electric motor 27 coupled with the output shaft 26 of the transmission 25 comprises an electric power device able to generate vehicle drive power separate from the vehicle drive power from the engine and able to generate electric power by the engine. In this embodiment shown in FIG. 1, this electric motor 27 comprises an AC synchronous motor provided with a rotor 28 attached on an output shaft 26 of the transmission 25 and attaching a plurality of permanent magnets to the outer circumference and a stator 29 provided with an excitation coil forming a rotary magnetic field. The excitation coil of the stator 29 is connected to a motor drive control circuit 30, while this motor drive control circuit 30 is connected to a battery 31 generating a DC high voltage.

The electronic control unit 40 is comprised of a digital computer and is provided with a ROM (read only memory) 42, RAM (random access memory) 43, CPU (microprocessor) 44, input port 45, and output port 46 which are connected to each other by a bi-directional bus 41. The output signals of the intake air detector 8, the temperature sensor 15 and the SOₓ sensor 16 are input through corresponding AD converters 47 to an input port 45. Further, the input port 45 receives as input various signals showing the gear of the transmission 25, the rotational speed of the output shaft 26, etc.

On the other hand, the accelerator pedal 32 is connected to a load sensor 33 generating an output voltage proportional to the amount of depression L of an accelerator pedal 32. The output voltage of the load sensor 33 is input through a corresponding AD converter 47 to the input port 45. Further, the input port 45 is connected to a crank angle sensor 34 generating an output pulse each time the crankshaft rotates by for example 10°. On the other hand, the output port 46 is connected through a corresponding drive circuit 48 to the fuel injector 3, EGR control valve 18, the fuel pump 22, the reducing agent feed valve 23, transmission 25, motor drive control circuit 30, etc.

The feed of electric power from the electric motor 27 to the excitation coil of the stator 29 is normally stopped. At this time, the rotor 28 rotates together with the output shaft 26 of the transmission 25. On the other hand, when driving the electric motor 27, the DC high voltage of the battery 31 is converted at the motor drive control circuit 30 to a three-phase alternating current of a frequency of fm and a current value of Im, and this three-phase alternating current is fed to the excitation coil of the stator 29. This frequency fm is the frequency required for making the rotating magnetic field generated by the excitation coil rotate in synchronization with the rotation of the rotor 28. This frequency fm is calculated by a CPU 44 based on the rotational speed of the output shaft 26. At the motor drive control circuit 30, this frequency fm is made the frequency of the three-phase alternating current.

On the other hand, the output torque of the electric motor 27 is substantially proportional to the current value Im of the three-phase alternating current. This current value Im is calculated at the CPU 44 based on the required output torque of the electric motor 27. In the motor drive control circuit 30, this current value Im is made the current value of the three-phase alternating current.

Further, if driving the electric motor 27 by external force, the electric motor 27 operates as a generator. At this time, the generated electric power is recovered by the battery 31. Whether to use external force to drive the electric motor 27 is judged by the CPU 44. When it is judged that external force should be used to drive the electric motor 27, a motor control circuit 3 is used to control the electric motor 27 so that the generated electric power is recovered at the battery 31.

Next, the NOₓ storage catalyst 14 shown in FIG. 1 will be explained. This NOₓ storage catalyst 14 is comprised of a substrate on which for example a catalyst carrier comprised of alumina is carried. FIG. 2 illustrates the cross-section of the surface part of this catalyst carrier 60. As shown in FIG. 2, the catalyst carrier 60 carries a precious metal catalyst 61 diffused on the surface. Further, the catalyst carrier 60 is formed with a layer of an NOₓ absorbent 62 on its surface.

In the embodiment according to the present invention, as the precious metal catalyst 61, platinum Pt is used. As the ingredient forming the NOₓ absorbent 62, for example, at least one element selected from potassium K, sodium Na, cesium Cs, and other such alkali metals, barium Ba, calcium Ca, and other such alkali earths, lanthanum La, yttrium Y, and other rare earths is used.

If the ratio of the air and fuel (hydrocarbons) fed into the engine intake passage, combustion chamber 2, and exhaust passage upstream of the NOₓ storage catalyst 14 is called the "air-fuel ratio of the exhaust gas", an NOₓ absorption and release action such that the NOₓ absorbent 62 absorbs the NOₓ when the air-fuel ratio of the exhaust gas is lean and releases the absorbed NOₓ when the oxygen concentration in the exhaust gas falls is performed.

That is, explaining this taking as an example the case of using barium Ba as the ingredient forming the NOₓ absorbent 62, when the air-fuel ratio of the exhaust gas is lean, that is, the oxygen concentration in the exhaust gas is high, the NO contained in the exhaust gas, as shown in FIG. 2, is oxidized on the platinum Pt 61 to become NO₂, next is absorbed in the NOₓ absorbent 62 and bonds with the barium oxide BaO to diffuse in the form of nitrate ions NO₃⁻ into the NOₓ absorbent 52. In this way, NOₓ is absorbed in the NOₓ absorbent 62. So long as the oxygen concentration in the exhaust gas is high, NO₂ is formed on the platinum Pt 61. So long as the NOₓ absorbent 62 is not saturated in NOₓ absorption ability, NO₂ is absorbed in the NOₓ absorbent 62 and nitrate ions NO₃⁻ are formed.

As opposed to this, for example if the reducing agent feed valve 23 feeds the reducing agent to make the exhaust gas a rich air-fuel ratio or stoichiometric air-fuel ratio, the oxygen concentration in the exhaust gas falls, so the reaction proceeds in the reverse direction (NO₃⁻→NO₂), therefore the nitrate ions NO₃⁻ in the NOₓ absorbent 62 are released in the form of NO₂ from the NOₓ absorbent 62. Next, the released NOₓ is reduced by the unburned HC and CO contained in the exhaust gas.

In this way, when the air-fuel ratio of the exhaust gas is lean, that is, when burning the fuel under a lean air-fuel ratio, the NOₓ in the exhaust gas is absorbed in the NOₓ absorbent 62. However, when the fuel continues to be burned under a lean air-fuel ratio, the NOₓ absorbent 62 eventually ends up becoming saturated in NOₓ absorption ability, therefore the NOₓ absorbent 62 ends up becoming unable to absorb the NOₓ. Therefore, in this embodiment of the present invention, before the NOₓ absorbent 62 becomes saturated in absorption ability, the reducing agent is fed from the reducing agent feed valve 23 to make the exhaust gas temporarily rich air-fuel ratio and thereby make the NOₓ absorbent 62 release the NOₓ.

On the other hand, the exhaust gas contains SOₓ, that is, SO₂. If this SO₂ flows into the NOₓ storage catalyst 14, this SO₂ is oxidized on the platinum Pt 61 and becomes SO₃. Next, this SO₃ is absorbed in the NOₓ absorbent 62, bonds with the barium oxide BaO, is diffused in the form of sulfate ions SO₄²⁻ in the NOₓ absorbent 62, and forms stable sulfate BaSO₄. However, the NOₓ absorbent 62 has a strong basicity, so this sulfate BaSO₄ is stable and hard to break down. If just making the exhaust gas rich air-fuel ratio, the sulfate BaSO₄ remains as is without breaking down. Therefore, in the NOₓ absorbent 62, the sulfate BaSO₄ increases along with the elapse of time, therefore the NOₓ amount which the NOₓ absorbent 62 can absorb falls along with the elapse of time.

In this regard, in this case, if making the air-fuel ratio of the exhaust gas flowing into the NOₓ storage catalyst 14 rich in the state where the temperature of the NOₓ storage catalyst 14 is made to rise to the SOₓ release temperature of 600°C or more, the NOₓ absorbent 62 releases SOₓ. However, in this case, the NOₓ absorbent 62 only releases a little SOₓ at a time. Therefore, to make the NOₓ absorbent 62 release all of the absorbed SOₓ, it is necessary to make the air-fuel ratio rich over a long time, therefore there is the problem that a large amount of fuel or reducing agent becomes necessary.

Therefore, in an embodiment of the present invention, the SOₓ trap catalyst 13 is arranged upstream of the NOₓ storage catalyst 14 to trap the SOₓ contained in the exhaust gas by this SOₓ trap catalyst 13 and thereby prevent SOₓ from flowing into the NOₓ storage catalyst 14. Next this SOₓ trap catalyst 13 will be explained.

FIG. 3 illustrates the cross-section of the surface part of a substrate 65 of this SOₓ trap catalyst 13. As shown in FIG. 3, the substrate 65 is formed with a coat layer 66 on its surface. This coat layer 66 carries a precious metal catalyst 67 diffused on its surface. In the embodiment according to the present invention, as the precious metal catalyst 67, platinum is used. As the ingredient forming the coat layer 66, for example, at least one element selected from potassium K, sodium Na, cesium Cs, and other such alkali metals, barium Ba, calcium Ca, and other such alkali earths, lanthanum La, yttrium Y, and other rare earths is used. That is, the coat layer 66 of the SOₓ trap catalyst 13 exhibits a strong basicity.

Now, the SOₓ contained in the exhaust gas, that is, SO₂, is oxidized on the platinum Pt 67 as shown in FIG. 3, then is trapped in the coat layer 66. That is, the SO₂ diffuses in the form of sulfate ions SO₄²⁻ in the coat layer 66 to form a sulfate. Note that as explained above, the coat layer 66 exhibits a strong basicity. Therefore, as shown in FIG. 3, part of the SO₂ contained in the exhaust gas is directly trapped in the coat layer 66.

In FIG. 3, the shading in the coat layer 66 shows the concentration of the trapped SO_{X}. As will be understood from FIG. 3, the SOₓ concentration in the coat layer 66 is highest near the surface of the coat layer 66. The further in, the lower it becomes. If the SOₓ concentration near the surface of the coat layer 66 increases, the surface of the coat layer 66 weakens in basicity and the SOₓ trap ability weakens. Here, if the ratio of the amount of the SOₓ trapped in the SOₓ trap catalyst 13 to the amount of the SOₓ in the exhaust gas is called the "SOₓ trap rate", if the basicity of the surface of the coat layer 66 is weakened, the SOₓ trap rate falls along with that.

FIG. 4 shows the change along with time of the SOₓ trap rate. As shown in FIG. 4, the SOₓ trap rate is first close to about 100 percent, but rapidly falls as time elapses. Therefore, in the present invention, when the SOₓ trap rate falls below a predetermined rate, a temperature raising control for raising the temperature of the SOₓ trap catalyst 13 under a lean or rich exhaust gas air-fuel ratio is performed and thereby the SOₓ trap rate is restored.

For example, if raising the temperature of the SOₓ trap catalyst 13 when the exhaust gas air-fuel ratio is lean, the SOₓ present concentrated near the surface of the coat layer 66 diffuses toward the deep part of the coat layer 66 so that the concentration becomes uniform. That is, the nitrates formed in the coat layer 66 change from an unstable state where they concentrate near the surface of the coat layer 66 to the stable state where they are diffused evenly across the entire inside of the coat layer 66. If the SOₓ present near the surface of the coat layer 66 diffuses toward the deep part of the coat layer 66, the SOₓ concentration near the surface of the coat layer 66 falls. Therefore, when the temperature raising control of the SOₓ trap catalyst 13 has ended, the SOₓ trap rate is restored.

If making the temperature of the SOₓ trap catalyst 13 about 450°C when performing the temperature raising control of the SOₓ trap catalyst 13, it is possible to make the SOₓ present near the surface of the coat layer 66 diffuse in the coat layer 66. If raising the temperature of the SOₓ trap catalyst 13 to 600°C or so, the SOₓ concentration in the coat layer 66 can be made considerably even. Therefore, in this embodiment according to the present invention, at the time of temperature raising control of the SOₓ trap catalyst 13, the temperature of the SOₓ trap catalyst 13 is raised to 600°C or so and is held at 600°C or so.

On the other hand, even if making the air-fuel ratio of the exhaust gas flowing into the SOₓ trap catalyst 13 rich in the state raising the temperature of the SOₓ trap catalyst 13, the SOₓ trap rate can be restored. That is, if making the air-fuel ratio of the exhaust gas flowing into the SOₓ trap catalyst 13 in the state of raising the temperature of the SOₓ trap catalyst 13 rich, the trapped SOₓ is released from the SOₓ trap catalyst 13 and therefore the SOₓ trap rate is restored. Therefore, both when making the air-fuel ratio of the exhaust gas flowing into the SOₓ trap catalyst 13 lean and rich in the state raising the temperature of the SOₓ trap catalyst 13, the SOₓ trap rate can be restored.

Next, the timing of start of the action for regeneration of the SOₓ trap catalyst 13 for restoring the SOₓ trap rate will be explained.

In this embodiment according to the present invention, the SOₓ amount trapped by the SOₓ trap catalyst 13 is estimated. When the SOₓ amount trapped by the SOₓ trap catalyst 13 exceeds a predetermined amount, it is judged that the SOₓ trap rate has fallen below the predetermined rate. At this time, the action for regeneration of the SOₓ trap catalyst 13 for restoration of the SOₓ trap rate is started.

That is, fuel contains sulfur in a certain ratio. Therefore, the amount of SOₓ contained in the exhaust gas, that is, the amount of SOₓ trapped by the SOₓ trap catalyst 13, is proportional to the amount of fuel injection. The amount of fuel injection is a function of the required torque and engine speed. Therefore, the amount of SOₓ trapped by the SOₓ trap catalyst 13 becomes a function of the required torque and engine speed. In this embodiment according to the present invention, the SOₓ amount SOXA trapped per unit time in the SOₓ trap catalyst 13 is stored as a function of the required torque TQ and engine speed N in the form of a map shown in FIG. 5(A) in advance in the ROM 42.

Further, lubrication oil also includes sulfur in a certain ratio. The amount of lubrication oil which is burned in the combustion chamber 2, that is, the amount of SOₓ contained in the exhaust gas and trapped in the SOₓ trap catalyst 13, becomes a function of the required torque and engine speed. In this embodiment according to the present invention, the SOₓ amount SOXB contained in the lubrication oil and trapped per unit time in the SOₓ trap catalyst 13 is stored as a function of the required torque TQ and engine speed N in the form of a map such as shown in FIG. 5(B) in advance in the ROM 42. The sum of the SOₓ amount SOXA and SOₓ amount SOXB is cumulatively added to calculate the SOₓ amount ΣSOX trapped by the SOₓ trap catalyst 13.

Further, in this embodiment according to the present invention, as shown in FIG. 6, the relationship between the SOₓ amount ΣSOX and the predetermined SOₓ amount SO(n) when the SOₓ trap catalyst 13 should be regenerated is stored in advance. When the SOₓ amount ΣSOX has exceeded the predetermined SO(n) (n=1,2,3,... ), the regeneration treatment of the SOₓ trap catalyst 13 is performed. Note that in FIG. 6, n shows the number of times of the regeneration treatment. Note that, in FIG. 6, the initial regeneration treatment is performed when the driving distance is 50,000 km or so.

FIG. 7 shows a routine for determining the timing of regeneration of the SOₓ trap catalyst 13.

Referring to FIG. 7, first, at step 70, the SOₓ amounts SOXA and SOXB trapped per unit time are read from FIGS. 5(A),(B). Next at step 71, the sum of these SOXA and SOXB is added to the SOₓ amount ΣSOX. Next at step 72, SOₓ it is judged if the amount ΣSOX has reached the predetermined amount SO(n) (n=1,2,3,... ) shown in FIG. 6. When the SOₓ amount ΣSOX has reached the predetermined amount SO(n), the routine proceeds to step 73 where control is performed for regeneration.

Next, control for regeneration of the SOₓ trap catalyst 13 performed at step 73 of FIG. 7 will be explained.

FIG. 8 shows the relation between the SOₓ amount ΣSOX trapped at the SOₓ trap catalyst 13, the SOₓ release temperature TS from the SOₓ trap catalyst 13, and the air-fuel ratio A/F of the exhaust gas flowing into the SOₓ trap catalyst 13. From FIG. 8, it will be understood that the larger the trapped SOₓ amount ΣSOX, the lower the SOₓ release temperature TS, while the smaller the exhaust gas air-fuel ratio, the lower the SOₓ release temperature TS.

Now, in FIG. 8, if the temperature of the SOₓ trap catalyst 13 becomes excessively higher than the SOₓ release temperature TS determined from the trapped SOₓ amount ΣSOX, a large amount of SOₓ is rapidly released from the SOₓ trap catalyst 13. As a result, the SOₓ concentration in the exhaust gas flowing out from the SOₓ trap catalyst 13 becomes extremely high. However as mentioned previously SOₓ itself is harmful. Further, if the temperature becomes higher, it sometimes changes to harmful hydrogen sulfide H₂S, so it is necessary to avoid the SOₓ concentration in the exhaust gas, exhausted into the outside air, from becoming higher. That is, it is necessary to hold the SOₓ concentration in the exhaust gas flowing out from the SOₓ trap catalyst 13 within a certain limit.

In this regard, if the engine load becomes larger or smaller, the exhaust gas temperature greatly fluctuates along with this. Therefore, during operation of the vehicle, it is difficult to prevent the temperature of the SOₓ trap catalyst 13 from becoming excessively higher than the SOₓ release temperature TS determined from the trapped SOₓ amount ΣNOX. Therefore, it is difficult to prevent the SOₓ concentration in the exhaust gas flowing out from the SOₓ trap catalyst 13 from becoming higher by a large extent.

Therefore, in the present invention, when the power of the electric power device is borrowed to regenerate the SOₓ trap catalyst 13, the vehicle drive power from the engine and the vehicle drive power from the electric power device are adjusted so that the SOₓ concentration in the exhaust gas flowing out from the SOₓ trap catalyst 13 becomes less than the predetermined SOₓ concentration during the regeneration period.

Explaining this a bit more specifically, when the SOₓ trap catalyst 13 should be regenerated, the output torque of the engine is controlled so that the SOₓ concentration in the exhaust gas flowing out from the SOₓ trap catalyst 13 becomes less than the predetermined SOₓ concentration during the regeneration period and the shortage or excess of the torque with respect to the required torque is adjusted by the electric power device.

However, as explained previously, the SOₓ trap catalyst 13 can be regenerated in either the state where the exhaust gas air-fuel ratio A/F is made rich or the state where it is made lean. Therefore, first, the case of regenerating the SOₓ trap catalyst 13 in the state with the exhaust gas air-fuel ratio A/F made rich will be explained.

In this case, at the time of regeneration, the temperature of the SOₓ trap catalyst 13 is maintained at substantially the SOₓ release temperature TS. When the regeneration treatment progresses, the SOₓ release action causes the trapped SOₓ amount ΣSOX to decrease, so as will be understood from FIG. 8, the SOₓ release temperature TS rises. Therefore, in the present invention, to raise the exhaust gas temperature as the trapped SOₓ amount ΣSOX is decreased, as shown in FIG. 9, the output torque of the engine is increased, as the regeneration treatment progresses. Due to this, as shown in FIG. 9, the SOₓ concentration in the exhaust gas flowing out from the SOₓ trap catalyst 13 is maintained at a predetermined concentration SX or less during the regeneration period. Note that in the example shown in FIG. 9, when the SOₓ amount ΣSOX has fallen to the predetermined amount SOR, the regeneration treatment is ended.

On the other hand, during the regeneration period, the shortage or excess of the torque with respect to the required torque is adjusted by the generation or consumption of the torque by the electric motor 27. To explain this, the relationship among the equivalent depression lines d₁ to di of the accelerator pedal 32, the engine speed N, and the output torque of the engine TQ is shown in Fig. 10. Note that in FIG. 10, the amount of depression of the accelerator pedal 32 becomes greater from d₁ to di. In FIG. 10, if the amount of depression of the accelerator pedal 32 and the engine speed N are determined, the output torque TQ at that time becomes the required torque.

That is, to maintain the temperature of the SOₓ trap catalyst 13 at the time of regeneration at substantially the SOₓ release temperature TS, assuming that the engine is made to operate in the operating state shown by the point A of FIG. 10. At this time, if the required torque TQ for driving the vehicle becomes the torque shown by the point B of FIG. 10, the electric motor 27 is driven to make up for the shortage ΔTQb of the torque. As opposed to this, if the required torque TQ for driving the vehicle becomes the torque shown by the point C of FIG. 10, the electric motor 27 is made to operate as a generator to consume the excess ΔTQc of the torque.

FIG. 11 shows the control for regeneration of the SOₓ trap catalyst 13 executed at step 73 of FIG. 7.

Referring to FIG. 11, first, at step 80, the required torque TQ for driving the vehicle is calculated based on the amount of depression of the accelerator pedal 32 and the engine speed N from FIG. 10. Next at step 81, the output torque of the engine Te required for making the temperature of the SOₓ trap catalyst 13 substantially the SOₓ release temperature TS is calculated. This output torque of the engine Te is stored as a function of the SOₓ amount ΣSOX, exhaust gas air-fuel ratio A/F, and engine speed N in advance in the ROM 42.

Next, at step 82, the output torque of the engine Te is subtracted from the required torque TQ to calculate the torque Tm which the electric motor 27 should generate or consume. Next at step 83, the fuel injection is controlled so that the output torque Te is obtained. Next at step 84, the electric motor 27 is controlled in accordance with the torque Tm. That is, when the torque Tm is positive, the electric motor 27 is driven so that the torque Tm for driving the vehicle is generated, while when the torque Tm is negative, the electric motor 27 is made to operate as a generator so as to consume the torque Tm.

Next, at step 85, it is judged if the regeneration treatment has ended. When the regeneration treatment has not ended, the routine returns to step 80. As opposed to this, when the regeneration treatment has ended, the routine proceeds to step 86 where the residual SOₓ amount SOR at the time of the end of regeneration is made the SOₓ amount ΣSOX.

FIG. 12 shows another embodiment of control for regeneration of the SOₓ trap catalyst 13 executed at step 73 of FIG. 7.

In this embodiment as well, basically, the output torque of the engine Te is made the output torque stored as a function of the SOₓ amount ΣSOX, exhaust gas air-fuel ratio A/F, and engine speed N in advance in the ROM 42, but in this embodiment, the output torque of the engine is corrected so that the SOₓ concentration detected by the SO_{X} sensor 16 becomes a predetermined SOₓ concentration range.

That is, referring to FIG. 12, in this embodiment, first, at step 90, the required torque TQ for driving the vehicle is calculated based on the amount of depression of the accelerator pedal 32 and the engine speed N from FIG. 10. Next, at step 91, the output torque of the engine Te required for making the temperature of the SOₓ trap catalyst 13 substantially the SOₓ release temperature TS is calculated. Next at step 92, a correction amount ΔTQ is added to the output torque Te to calculate the final output torque of the engine Teo (=Te+ΔTQ).

Next at step 93, the final output torque of the engine Teo is subtracted from the required torque TQ to calculate the torque Tm which the electric motor 27 generates or consumes. Next at step 94, the fuel injection is controlled so that the final output torque of the engine Teo is obtained. Next at step 95, the electric motor 27 is controlled in accordance with the torque Tm. That is, as mentioned previously, when the torque Tm is positive, the electric motor 27 is driven so that the torque Tm for driving the vehicle is generated, while when the torque Tm is negative, the electric motor 27 is made to operate as a generator so as to consume the torque Tm.

Next, at step 96, it is judged if the regeneration treatment has ended. When the regeneration treatment has not ended, the routine proceeds to step 97 where to the SOₓ concentration SD in the exhaust gas flowing out from the SOₓ trap catalyst 13 is detected by the SOₓ sensor 16. Next at step 98, it is judged if the SOₓ concentration SD is larger than the sum of the reference SOₓ concentration SDo and a constant value α. When SD>SDo+α, the routine proceeds to step 99 where the constant value m is subtracted from the correction amount ΔTQ. As opposed to this, when SD≤SDo+α, the routine proceeds to step 100. When it is judged at step 100 that SD<SDo-α, the routine proceeds to step 101 where the constant value m is added to the correction amount ΔTQ. That is, the final output torque of the engine Teo is controlled so that the SOₓ concentration SD becomes the SDo-α<SD<SDo+α. On the other hand, when it is judged at step 96 that the regeneration treatment has ended, the routine proceeds to step 102 where the residual SOₓ amount SOR at the time of completion of regeneration is made the SOₓ amount ΣSOX.

Next, the case of trying to regenerate the SOₓ trap catalyst 13 in the state of making the exhaust gas air-fuel ratio A/F lean will be explained. In this case, as explained later, the temperature of the SOₓ trap catalyst 13 is raised to 600°C or so and is maintained at 600°C or so. However, in this case, as will be understood from the curve of A/F=16 of FIG. 8, when the SOₓ amount ΣSOX is large, the SOₓ release temperature TS becomes lower. Therefore, at this time, if raising the temperature of the SOₓ trap catalyst 13 to 600°C or so, a large amount of SOₓ ends up being released. That is, at this time, the temperature of the SOₓ trap catalyst 13 has to be maintained at substantially the SOₓ release temperature TS.

Therefore, when trying to regenerate the SOₓ trap catalyst 13 in the state where the air-fuel ratio A/F of the exhaust gas is made lean, as shown in FIG. 13, at the initial stage of the regeneration treatment, the output torque of the engine is gradually raised, then the output torque of the engine is held substantially constant. That is, in this case, the output torque of the engine is held substantially constant except at the initial stage of the regeneration treatment.

Next, another embodiment of an electric device will be explained with reference to FIG. 14.

Referring to FIG. 14, in this embodiment, the electric power device comprises a pair of motor-generators 200, 201 operating as an electric motor and generator and a planetary gear mechanism 202. This planetary gear mechanism 202 is provided with a sun gear 203, ring gear 204, planetary gear 205 arranged between the sun gear 203 and ring gear 204, and planetary carrier 206 carrying the planetary gear 205. The sun gear 203 is coupled with a shaft 207 of the motor-generator 201, while the planetary carrier 206 is coupled with an output shaft 211 of the internal combustion engine 1. Further, the ring gear 204 is on the one hand coupled with a shaft 208 of the motor-generator 200, while on the other hand is coupled with an output shaft 210 coupled to the drive wheels through a belt 209. Therefore, it is learned that when the ring gear 204 turns, the output shaft 210 is made to turn along with that.

An explanation of the detailed operation of this electric power device will be omitted, but generally speaking, the motor-generator 200 mainly operates as an electric motor, while the motor-generator 201 mainly operates as a generator.

When the torque is insufficient with just the output torque of the engine at the time of regeneration of the SO_{X} trap catalyst 13, the motor-generator 200 is driven and the output torque of the motor-generator 200 is overlaid on the output torque of the engine. At this time, the motor-generator 201 is stopped. As opposed to this, at the time of regeneration of the SO_{X} trap catalyst 13, when the output torque of the engine is in excess compared with the required torque, the power generation action of the motor-generator 201 is performed and the excess of the torque is consumed by the power generation action of the motor-generator 201. At this time, the motor-generator 200 is stopped.

### LIST OF REFERENCES

- 5: exhaust manifold
- 13: SOₓ trap catalyst
- 14: NOₓ storage catalyst
- 25: transmission
- 27: electric motor

## Claims

1. A vehicle, comprising a compression ignition type internal combustion engine (1), an electric power device (27) and an exhaust purification device (12) for said internal combustion engine (1),
said exhaust purification device (12) arranging, in an engine exhaust passage, an SOₓ trap catalyst (13) able to trap SOₓ contained in exhaust gas, and, in the exhaust passage downstream of the SOₓ trap catalyst (13), an NOₓ storage catalyst (14) storing NOₓ contained in the exhaust gas when the air-fuel ratio of an inflowing exhaust gas is lean and releasing stored NOₓ when the air-fuel ratio of the inflowing exhaust gas becomes a stoichiometric air-fuel ratio or rich,
said electric power device (27) being able to generate vehicle drive power separate from the vehicle drive power from the engine (1) and able to generate electric power from the engine (1),
wherein, when the SOₓ trap catalyst (13) should be regenerated, the vehicle drive power from the engine (1) and the vehicle drive power from the electric power device (27) are adjusted so that an SOₓ concentration in the exhaust gas flowing out from the SOₓ trap catalyst (13) becomes less than a predetermined SOₓ concentration during a regeneration period.

2. The vehicle according to claim 1, wherein when the SOₓ trap catalyst (13) should be regenerated, the output torque of the engine (1) is controlled so that the SOₓ concentration in the exhaust gas flowing out from the SOₓ trap catalyst (13) becomes less than the predetermined SOₓ concentration during the regeneration period, and a shortage or excess of the torque with respect to the required torque is adjusted by the electric power device (27).

3. The vehicle according to claim 2, wherein the SOₓ trap catalyst (13) is regenerated under a rich air-fuel ratio of exhaust gas flowing into the SOₓ trap catalyst (13) and, at this time, the output torque of the engine (1) is made to increase along with progress in a regeneration treatment.

4. The vehicle according to claim 2, wherein the SOₓ trap catalyst (13) is regenerated under a lean air-fuel ratio of exhaust gas flowing into the SOₓ trap catalyst (13) and, at this time, the output torque of the engine (1) is held substantially constant except at an initial stage of a regeneration treatment.

5. The vehicle according to claim 2, wherein the SOₓ concentration in the exhaust gas flowing out from the SOₓ trap catalyst (13) is detected, and the output torque of the engine (1) is controlled so that a detected SOₓ concentration becomes within a predetermined SOₓ concentration range.

## Patentansprüche

1. Fahrzeug, das einen Verbrennungsmotor (1) mit Verdichtungszündung, eine elektrische Leistungsvorrichtung (27) und eine Abgasreinigungsvorrichtung (12) für den Verbrennungsmotor (1) aufweist,
wobei die Abgasreinigungsvorrichtung (12) in einem Abgaskanal des Motors einen Katalysator (13) mit SOₓ-Falle, der in der Lage ist, im Abgas enthaltenes SOₓ einzufangen, und stromabwärts von dem Katalysator (13) mit der SOₓ-Falle im Abgaskanal einen NOₓ-Speicherkatalysator (14) aufweist, der im Abgas enthaltenes NOₓ speichert, wenn die Gemischzusammensetzung eines einströmenden Abgases mager ist, und der gespeichertes NOₓ abgibt, wenn die Gemischzusammensetzung des einströmenden Abgases ein stöchiometrisches Luft/Kraftstoffverhältnis erreicht oder fett wird,
wobei die elektrische Leistungsvorrichtung (37) in der Lage ist, eine von der Fahrzeugantriebsleistung des Motors (1) getrennte Fahrzeug-Antriebsleistung zu erzeugen, und in der Lage ist, elektrische Leistung aus dem Motor (1) zu erzeugen,
wobei, wenn der Katalysator (13) mit der SOₓ-Falle regeneriert werden muss, die Fahrzeug-Antriebsleistung vom Motor (1) und die Fahrzeug-Antriebsleistung von der elektrischen Leistungsvorrichtung (27) so geregelt werden, dass eine SOₓ-Konzentration im Abgas, das aus dem Katalysator (13) mit der SOₓ-Falle strömt, niedriger wird als eine während eines Regenerierungszeitraums vorgegebene SOₓ-Konzentration.

2. Fahrzeug nach Anspruch 1, wobei, wenn der Katalysator (13) mit der SOₓ-Falle regeneriert werden muss, das Ausgangsdrehmoment des Motors (1) so gesteuert wird, dass die SOₓ-Konzentration im Abgas, das aus dem Katalysator (13) mit der SOₓ-Falle strömt, niedriger wird als die während des Regenerierungszeitraums vorgegebene SOₓ-Konzentration, und ein in Bezug auf das benötigte Drehmoment zu kleines oder zu großes Drehmoment durch die elektrische Leistungsvorrichtung (27) angepasst wird.

3. Fahrzeug nach Anspruch 2, wobei der Katalysator (13) mit der SOₓ-Falle regeneriert wird, während die Gemischzusammensetzung des Abgases, das in den Katalysator (13) mit der SOₓ-Falle strömt, fett ist, und wobei gleichzeitig das Ausgangsdrehmoment des Motors (1) einhergehend mit dem Fortschreiten der Regenerierungsbehandlung erhöht wird.

4. Fahrzeug nach Anspruch 2, wobei der Katalysator (13) mit der SOₓ-Falle regeneriert wird, während die Gemischzusammensetzung des Abgases, das in den Katalysator (13) mit der SOₓ-Falle strömt, mager ist, und wobei gleichzeitig das Ausgangsdrehmoment des Motors (1), abgesehen von einem Anfangsstadium einer Regenerierungsbehandlung, im Wesentlichen konstant gehalten wird.

5. Fahrzeug nach Anspruch 2, wobei die SOₓ-Konzentration im Abgas, das aus dem Katalysator (13) mit der SOₓ-Falle strömt, erfasst wird, und das Ausgangsdrehmoment des Motors (1) so gesteuert wird, dass eine erfasste SOₓ-Konzentration in einem vorgegebenen SOₓ-Konzentrationsbereich liegt.

## Revendications

1. Véhicule, comportant un moteur à combustion interne du type à allumage par compression (1), un dispositif d'alimentation électrique (27) et un dispositif de purification d'échappement (12) pour ledit moteur à combustion interne (1),
ledit dispositif de purification d'échappement (12) prévoyant, dans un passage d'échappement de moteur, un catalyseur de piégeage de SOₓ (13) capable de piéger du SOₓ contenu dans du gaz d'échappement, et, dans le passage d'échappement en aval du catalyseur de piégeage de SOₓ (13), un catalyseur de stockage de NOₓ (14) qui stocke du NOₓ contenu dans le gaz d'échappement quand le rapport air-carburant d'un gaz d'échappement entrant est pauvre et libérant du NOₓ stocké quand le rapport air-carburant du gaz d'échappement entrant devient un rapport air-carburant stoechiométrique ou riche,
ledit dispositif d'alimentation électrique (27) étant capable de générer une puissance d'entraînement de véhicule séparée de la puissance d'entraînement de véhicule du moteur (1) et capable de générer de la puissance électrique à partir du moteur (1),
dans lequel, quand le catalyseur de piégeage de SOₓ (13) doit être régénéré, la puissance d'entraînement de véhicule du moteur (1) et la puissance d'entraînement de véhicule du dispositif d'alimentation électrique (27) sont ajustées de telle sorte qu'une concentration en SOₓ dans le gaz d'échappement s'écoulant en sortie du catalyseur de piégeage de SOₓ (13) devient inférieure à une concentration prédéterminée en SOₓ pendant une période de régénération.

2. Véhicule selon la revendication 1, dans lequel quand le catalyseur de piégeage de SOₓ (13) doit être régénéré, le couple de sortie du moteur (1) est commandé de telle sorte que la concentration en SOₓ dans le gaz d'échappement s'écoulant en sortie du catalyseur de piégeage de SOₓ (13) devient inférieure à la concentration prédéterminée en SOₓ pendant la période de régénération, et un manque ou un excès de couple par rapport au couple exigé est ajusté par le dispositif d'alimentation électrique (27).

3. Véhicule selon la revendication 2, dans lequel le catalyseur de piégeage de SOₓ (13) est régénéré sous un rapport air-carburant riche de gaz d'échappement s'écoulant dans le catalyseur de piégeage de SOₓ (13) et, à ce moment là, le couple de sortie du moteur (1) est amené à augmenter avec la progression d'un traitement de régénération.

4. Véhicule selon la revendication 2, dans lequel le catalyseur de piégeage de SOₓ (13) est régénéré sous un rapport air-carburant pauvre de gaz d'échappement s'écoulant dans le catalyseur de piégeage de SOₓ (13) et, à ce moment là, le couple de sortie du moteur (1) est maintenu sensiblement constant excepté à un stade initial d'un traitement de régénération.

5. Véhicule selon la revendication 2, dans lequel la concentration en SOₓ dans le gaz d'échappement s'écoulant en sortie du catalyseur de piégeage de SOₓ (13) est détectée, et le couple de sortie du moteur (1) est commandé de telle sorte qu'une concentration en SOₓ détectée se retrouve dans une plage de concentration en SOₓ prédéterminée.
